# EUROPÄISCHE PATENTSCHRIFT

(11) **EP 1 789 970 B1**
(45) Veröffentlichungstag und Bekanntmachung des Hinweises auf die Patenterteilung: **24.03.2010**
(21) Anmeldenummer: 06707017.7
(22) Anmeldetag: 16.02.2006
(51) Int. Cl.: G11B 20/12, H04S 7/00

(54) **VORRICHTUNG UND VERFAHREN ZUM SPEICHERN VON AUDIODATEIEN**
DEVICE AND METHOD FOR STORING AUDIO FILES
PROCÉDÉ ET DISPOSITIF POUR MÉMORISER DES FICHIERS AUDIO

(30) Priorität: 23.02.2005 DE 102005008342
(43) Veröffentlichungstag der Anmeldung: 30.05.2007
(73) Patentinhaber: Fraunhofer-Gesellschaft zur Förderung der angewandten Forschung e.V., 80686 München (DE)
(72) Erfinder: REICHELT, Katrin, 98693 Ilmenau (DE); GATZSCHE, Gabriel, 98693 Martinroeda (DE); BRIX, Sandra, 98693 Ilmenau (DE)
(74) Vertreter: Zinkler, Franz
(86) Internationale Anmeldenummer: PCT/EP2006/001416
(87) Internationale Veröffentlichungsnummer: WO 2006/089685

(56) Entgegenhaltungen:
- HEIMRICH T ET AL: "Verwaltung spatio-temporaler Audiodaten für die Wellenfeldsynthese"[Online] 2. März 2005 (2005-03-02), Seiten 1-10, XP002378393 Gefunden im Internet: URL:http://mordor.prakinf.tu-ilmenau.de/pa pers/dbis/2005/HeimSat05btw.pdf> [gefunden am 2006-07-12]
- HALVORSEN, GRIWODZ, LUND, GOEBEL, PLAGEMANN: "STORAGE SYSTEMS SUPPORT FOR MULTIMEDIA APPLICATIONS"[Online] 1. Juni 2003 (2003-06-01), Seiten 1-18, XP002390632 ISBN: 82-7368-259-5 Gefunden im Internet: URL:http://www.ifi.uio.no/dmms/papers/124. pdf> [gefunden am 2006-07-12]
- HEIMRICH T: "Modeling of Output Constraints in Multimedia Database Systems" MULTIMEDIA MODELLING CONFERENCE, 2004. MMM 2005. PROCEEDINGS OF THE 11TH INTERNATIONAL HONOLULU, HI, USA 12-14 JAN. 2005, PISCATAWAY, NJ, USA,IEEE, 12. Januar 2005 (2005-01-12), Seiten 399-404, XP010765662 ISBN: 0-7695-2164-9 in der Anmeldung erwähnt
- YU C ET AL: "EFFICIENT PLACEMENT OF AUDIO DATA ON OPTICAL DISKS FOR REAL-TIME APPLICATIONS" COMMUNICATIONS OF THE ASSOCIATION FOR COMPUTING MACHINERY, ACM, NEW YORK, NY, US, Bd. 32, Nr. 7, 1. Juli 1989 (1989-07-01), Seiten 862-871, XP000045775 ISSN: 0001-0782
- WATKINS A R ET AL: "Storing continuous media objects using parallelism with merging" COMPUTER SOFTWARE AND APPLICATIONS CONFERENCE, 1995. COMPSAC 95. PROCEEDINGS., NINETEENTH ANNUAL INTERNATIONAL DALLAS, TX, USA 9-11 AUG. 1995, LOS ALAMITOS, CA, USA,IEEE COMPUT. SOC, US, 9. August 1995 (1995-08-09), Seiten 339-345, XP010192750 ISBN: 0-8186-7119-X
- THOMAS SPORER: "WAVE FIELD SYNTHESIS - GENERATION AND REPRODUCTION OF NATURAL SOUND ENVIRONMENTS"[Online] 5. Oktober 2004 (2004-10-05), Seiten 133-138, XP002390633 Naples, Italy Gefunden im Internet: URL:http://dafx04.na.infn.it/WebProc/Proc/ P_133.pdf> [gefunden am 2006-07-12]
- VENKAT RANGAN P ET AL: "EFFICIENT STORAGE TECHNIQUES FOR DIGITAL CONTINUOUS MULTIMEDIA" IEEE TRANSACTIONS ON KNOWLEDGE AND DATA ENGINEERING, IEEE SERVICE CENTER, LOS ALAMITOS, CA, US, Bd. 5, Nr. 4, 1. August 1993 (1993-08-01), Seiten 564-573, XP000611900 ISSN: 1041-4347

## Beschreibung

Die vorliegende Erfindung bezieht sich auf das Gebiet der Wellenfeldsynthese und insbesondere auf die Ansteuerung einer Wellenfeldsynthese-Rendering-Einrichtung mit zu verarbeitenden Daten.

Die vorliegende Erfindung bezieht sich auf Wellenfeldsynthese-Konzepte und insbesondere auf effiziente Wellenfeldsynthese-Konzept in Verbindung mit einem Multi-Renderer-System.

Es besteht ein steigender Bedarf an neuen Technologien und innovativen Produkten im Bereich der Unterhaltungselektronik. Dabei ist es eine wichtige Voraussetzung für den Erfolg neuer multimedialer Systeme, optimale Funktionalitäten bzw. Fähigkeiten anzubieten. Erreicht wird das durch den Einsatz digitaler Technologien und insbesondere der Computertechnik. Beispiele hierfür sind die Applikationen, die einen verbesserten realitätsnahen audiovisuellen Eindruck bieten. Bei bisherigen Audiosystemen liegt ein wesentlicher Schwachpunkt in der Qualität der räumlichen Schallwiedergabe von natürlichen, aber auch von virtuellen Umgebungen.

Verfahren zur mehrkanaligen Lautsprecherwiedergabe von Audiosignalen sind seit vielen Jahren bekannt und standardisiert. Alle üblichen Techniken besitzen den Nachteil, dass sowohl der Aufstellungsort der Lautsprecher als auch die Position des Hörers dem Übertragungsformat bereits eingeprägt sind. Bei falscher Anordnung der Lautsprecher im Bezug auf den Hörer leidet die Audioqualität deutlich. Ein optimaler Klang ist nur in einem kleinen Bereich des Wiedergaberaums, dem so genannten Sweet Spot, möglich.

Ein besserer natürlicher Raumeindruck sowie eine stärkere Einhüllung bei der Audiowiedergabe kann mit Hilfe einer neuen Technologie erreicht werden. Die Grundlagen dieser Technologie, die so genannte Wellenfeldsynthese (WFS; WFS = Wave-Field Synthesis), wurden an der TU Delft erforscht und erstmals in den späten 80er-Jahren vorgestellt (Berkhout, A.J.; de Vries, D.; Vogel, P.: Acoustic control by Wave-field Synthesis. JASA 93, 1993).

Infolge der enormen Anforderungen dieser Methode an Rechnerleistung und Übertragungsraten wurde die Wellenfeldsynthese bis jetzt nur selten in der Praxis angewendet. Erst die Fortschritte in den Bereichen der Mikroprozessortechnik und der Audiocodierung gestatten heute den Einsatz dieser Technologie in konkreten Anwendungen. Erste Produkte im professionellen Bereich werden nächstes Jahr erwartet. In wenigen Jahren sollen auch erste Wellenfeldsynthese-Anwendungen für den Konsumerbereich auf den Markt kommen.

Die Grundidee von WFS basiert auf der Anwendung des Huygens'schen Prinzips der Wellentheorie:
Jeder Punkt, der von einer Welle erfasst wird, ist Ausgangspunkt einer Elementarwelle, die sich kugelförmig bzw. kreisförmig ausbreitet.

Angewandt auf die Akustik kann durch eine große Anzahl von Lautsprechern, die nebeneinander angeordnet sind (einem so genannten Lautsprecherarray), jede beliebige Form einer einlaufenden Wellenfront nachgebildet werden. Im einfachsten Fall, einer einzelnen wiederzugebenden Punktquelle und einer linearen Anordnung der Lautsprecher, müssen die Audiosignale eines jeden Lautsprechers mit einer Zeitverzögerung und Amplitudenskalierung so gespeist werden, dass sich die abgestrahlten Klangfelder der einzelnen Lautsprecher richtig überlagern. Bei mehreren Schallquellen wird für jede Quelle der Beitrag zu jedem Lautsprecher getrennt berechnet und die resultierenden Signale addiert. Befinden sich die wiederzugebenden Quellen in einem Raum mit reflektierenden Wänden, dann müssen auch Reflexionen als zusätzliche Quellen über das Lautsprecherarray wiedergegeben werden. Der Aufwand bei der Berechnung hängt daher stark von der Anzahl der Schallquellen, den Reflexionseigenschaften des Aufnahmeraums und der Anzahl der Lautsprecher ab.

Der Vorteil dieser Technik liegt im Besonderen darin, dass ein natürlicher räumlicher Klangeindruck über einen großen Bereich des Wiedergaberaums möglich ist. Im Gegensatz zu den bekannten Techniken werden Richtung und Entfernung von Schallquellen sehr exakt wiedergegeben. In beschränktem Maße können virtuelle Schallquellen sogar zwischen dem realen Lautsprecherarray und dem Hörer positioniert werden.

Obgleich die Wellenfeldsynthese für Umgebungen gut funktioniert, deren Beschaffenheiten bekannt sind, treten doch Unregelmäßigkeiten auf, wenn sich die Beschaffenheit ändert bzw. wenn die Wellenfeldsynthese auf der Basis einer Umgebungsbeschaffenheit ausgeführt wird, die nicht mit der tatsächlichen Beschaffenheit der Umgebung übereinstimmt.

Eine Umgebungsbeschaffenheit kann durch die Impulsantwort der Umgebung beschrieben werden.

Dies wird anhand des nachfolgenden Beispiels näher dargelegt. Es wird davon ausgegangen, dass ein Lautsprecher ein Schallsignal gegen eine Wand aussendet, deren Reflexion unerwünscht ist. Für dieses einfache Beispiel würde die Raumkompensation unter Verwendung der Wellenfeldsynthese darin bestehen, dass zunächst die Reflexion dieser Wand bestimmt wird, um zu ermitteln, wann ein Schallsignal, das von der Wand reflektiert worden ist, wieder beim Lautsprecher ankommt, und welche Amplitude dieses reflektierte Schallsignal hat. Wenn die Reflexion von dieser Wand unerwünscht ist, so besteht mit der Wellenfeldsynthese die Möglichkeit, die Reflexion von dieser Wand zu eliminieren, indem dem Lautsprecher ein zu dem Reflexionssignal gegenphasiges Signal mit entsprechender Amplitude zusätzlich zum ursprünglichen Audiosignal eingeprägt wird, so dass die hinlaufende Kompensationswelle die Reflexionswelle auslöscht, derart, dass die Reflexion von dieser Wand in der Umgebung, die betrachtet wird, eliminiert ist. Dies kann dadurch geschehen, dass zunächst die Impulsantwort der Umgebung berechnet wird und auf der Basis der Impulsantwort dieser Umgebung die Beschaffenheit und Position der Wand bestimmt wird, wobei die Wand als Spiegelquelle interpretiert wird, also als Schallquelle, die einen einfallenden Schall reflektiert.

Wird zunächst die Impulsantwort dieser Umgebung gemessen und wird dann das Kompensationssignal berechnet, das dem Audiosignal überlagert dem Lautsprecher eingeprägt werden muss, so wird eine Aufhebung der Reflexion von dieser Wand stattfinden, derart, dass ein Hörer in dieser Umgebung schallmäßig den Eindruck hat, dass diese Wand überhaupt nicht existiert.

Entscheidend für eine optimale Kompensation der reflektierten Welle ist jedoch, dass die Impulsantwort des Raums genau bestimmt wird, damit keine Über- oder Unterkompensation auftritt.

Die Wellenfeldsynthese ermöglicht somit eine korrekte Abbildung von virtuellen Schallquellen über einen großen Wiedergabebereich. Gleichzeitig bietet sie dem Tonmeister und Toningenieur neues technisches und kreatives Potential bei der Erstellung auch komplexer Klanglandschaften. Die Wellenfeldsynthese (WFS oder auch Schallfeldsynthese), wie sie Ende der 80-er Jahre an der TU Delft entwickelt wurde, stellt einen holographischen Ansatz der Schallwiedergabe dar. Als Grundlage hierfür dient das Kirchhoff-Helmholtz-Integral. Dieses besagt, dass beliebige Schallfelder innerhalb eines geschlossenen Volumens mittels einer Verteilung von Monopol- und Dipolschallquellen (Lautsprecherarrays) auf der Oberfläche dieses Volumens erzeugt werden können. Bei der Wellenfeldsynthese wird aus einem Audiosignal, das eine virtuelle Quelle an einer virtuellen Position aussendet, eine Synthesesignal für jeden Lautsprecher des Lautsprecherarrays berechnet, wobei die Synthesesignale derart hinsichtlich Amplitude und Phase gestaltet sind, dass eine Welle, die sich aus der Überlagerung der einzelnen durch die im Lautsprecherarray vorhandenen Lautsprecher ausgegebenen Schallwelle ergibt, der Welle entspricht, die von der virtuellen Quelle an der virtuellen Position herrühren würde, wenn diese virtuelle Quelle an der virtuellen Position eine reale Quelle mit einer realen Position wäre.

Typischerweise sind mehrere virtuelle Quellen an verschiedenen virtuellen Positionen vorhanden. Die Berechnung der Synthesesignale wird für jede virtuelle Quelle an jeder virtuellen Position durchgeführt, so dass typischerweise eine virtuelle Quelle in Synthesesignalen für mehrere Lautsprecher resultiert. Von einem Lautsprecher aus betrachtet empfängt dieser Lautsprecher somit mehrere Synthesesignale, die auf verschiedene virtuelle Quellen zurückgehen. Eine Überlagerung dieser Quellen, die aufgrund des linearen Superpositionsprinzips möglich ist, ergibt dann das von dem Lautsprecher tatsächlich ausgesendete Wiedergabesignal.

Die Möglichkeiten der Wellenfeldsynthese können um so besser ausgeschöpft werden, je größer die Lautsprecherarrays sind, d. h. um so mehr einzelne Lautsprecher bereitgestellt werden. Damit steigt jedoch auch die Rechenleistung, die eine Wellenfeldsyntheseeinheit vollbringen muss, da typischerweise auch Kanalinformationen berücksichtigt werden müssen. Dies bedeutet im einzelnen, dass von jeder virtuellen Quelle zu jedem Lautsprecher prinzipiell ein eigener Übertragungskanal vorhanden ist, und dass prinzipiell der Fall vorhanden sein kann, dass jede virtuelle Quelle zu einem Synthesesignal für jeden Lautsprecher führt, bzw. dass jeder Lautsprecher eine Anzahl von Synthesesignalen erhält, die gleich der Anzahl von virtuellen Quellen ist.

Wenn insbesondere bei Kinoanwendungen die Möglichkeiten der Wellenfeldsynthese dahingehend ausgeschöpft werden sollen, dass die virtuellen Quellen auch beweglich sein können, so ist zu erkennen, dass aufgrund der Berechnung der Synthesesignale, der Berechnung der Kanalinformationen und der Erzeugung der Wiedergabesignale durch Kombination der Kanalinformationen und der Synthesesignale ganz erhebliche Rechenleistungen zu bewältigen sind.

Darüber hinaus sei an dieser Stelle angemerkt, dass die Qualität der Audiowiedergabe mit der Anzahl der zur Verfügung gestellten Lautsprecher steigt. Dies bedeutet, dass die Audiowiedergabequalität um so besser und realistischer wird, um so mehr Lautsprecher in dem bzw. den Lautsprecherarrays vorhanden sind.

Im obigen Szenario könnten die fertig gerenderten und analog-digital-gewandelten Wiedergabesignale für die einzelnen Lautsprecher beispielsweise über Zweidrahtleitungen von der Wellenfeldsynthese-Zentraleinheit zu den einzelnen Lautsprechern übertragen werden. Dies hätte zwar den Vorteil, dass nahezu sichergestellt ist, dass alle Lautsprecher synchron arbeiten, so dass hier zu Synchronisationszwecken keine weiteren Maßnahmen erforderlich wären. Andererseits könnte die Wellenfeldsynthese-Zentraleinheit immer nur für einen speziellen Wiedergaberaum bzw. für eine Wiedergabe mit einer festgelegten Anzahl von Lautsprechern hergestellt werden. Dies bedeutet, dass für jeden Wiedergaberaum eine eigene Wellenfeldsynthese-Zentraleinheit gefertigt werden müsste, die ein erhebliches Maß an Rechenleistung zu vollbringen hat, da die Berechnung der Audiowiedergabesignale insbesondere im Hinblick auf viele Lautsprecher bzw. viele virtuelle Quellen zumindest teilweise parallel und in Echtzeit erfolgen muss.

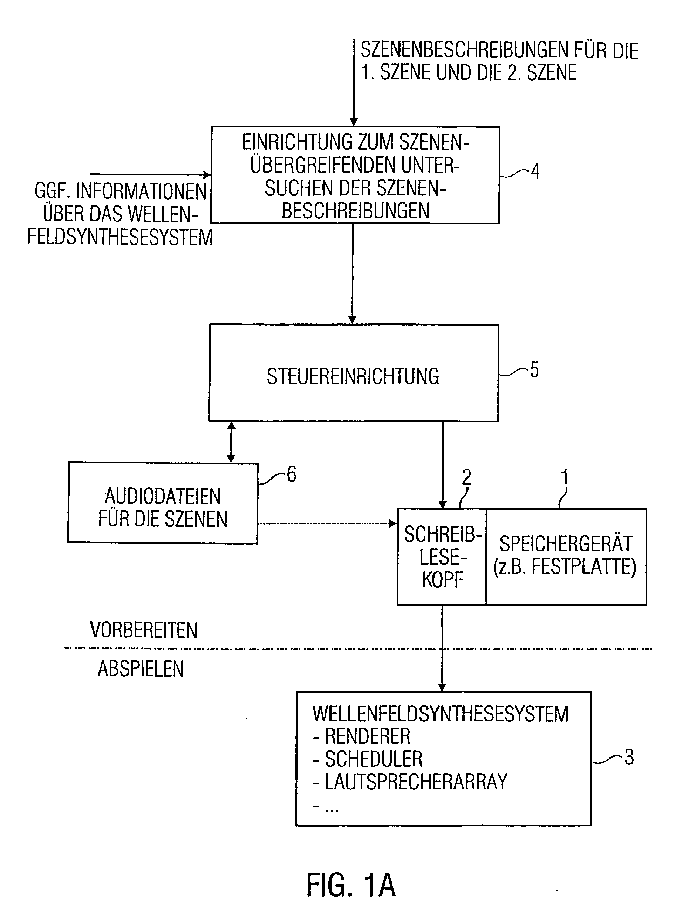

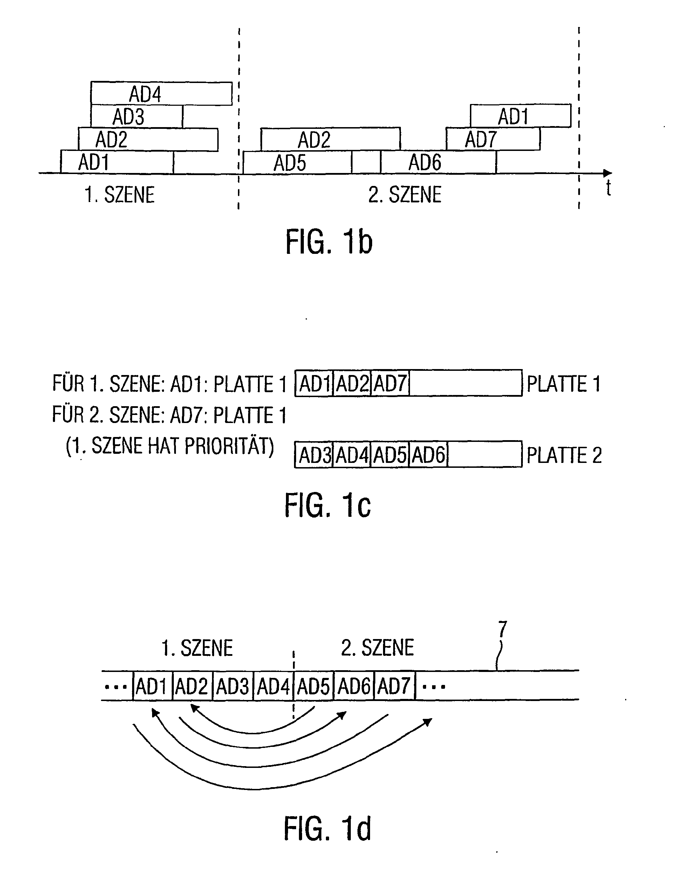

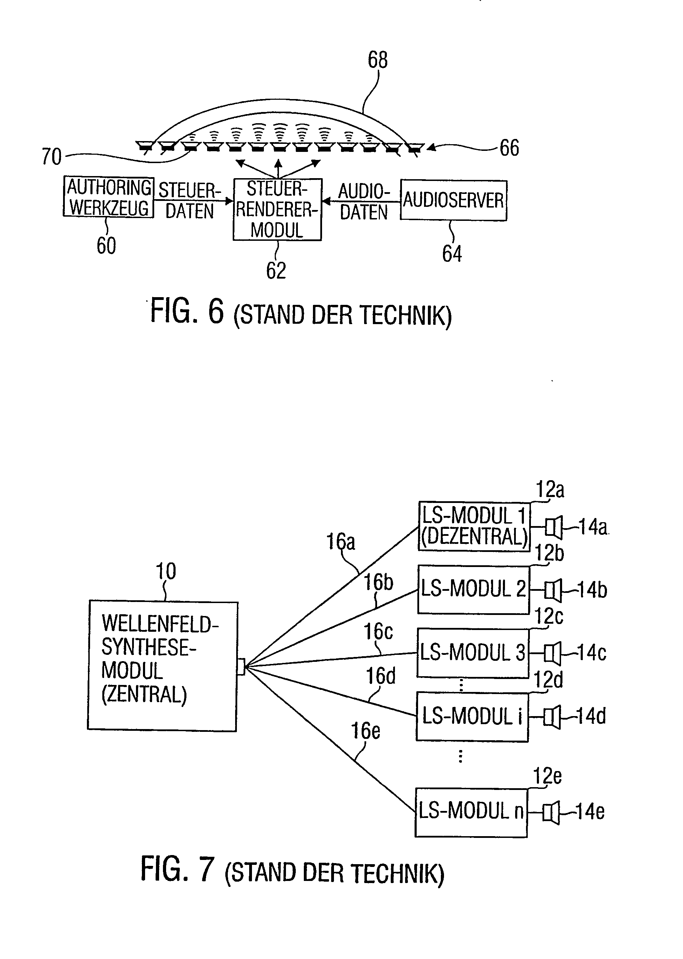

Das Deutsche Patent DE 10254404 B4 offenbart ein System, wie es in Fig. 7 dargestellt ist. Ein Teil ist das zentrale Wellenfeldsynthesemodul 10. Der andere Teil setzt sich aus einzelnen Lautsprechermodulen 12a, 12b, 12c, 12d, 12e zusammen, die mit tatsächlichen physikalischen Lautsprechern 14a, 14b, 14c, 14d, 14e derart verbunden sind, wie es in Fig. 1 gezeigt ist. Es sei darauf hingewiesen, dass die Anzahl der Lautsprecher 14a-14e bei typischen Anwendungen im Bereich über 50 und typischerweise sogar deutlich über 100 liegt. Wird jedem Lautsprecher ein eigenes Lautsprechermodul zugeordnet, so wird auch die entsprechende Anzahl von Lautsprecher-Modulen benötigt. Je nach Anwendung wird es jedoch bevorzugt, von einem Lautsprecher-Modul aus eine kleine Gruppe von nebeneinander liegenden Lautsprechern anzusprechen. In diesem Zusammenhang ist es beliebig, ob ein Lautsprecher-Modul, das mit vier Lautsprechern beispielsweise verbunden ist, die vier Lautsprecher mit demselben Wiedergabesignal speist, oder ob für die vier Lautsprecher entsprechende unterschiedliche Synthesesignale berechnet werden, so dass ein solches Lautsprecher-Modul eigentlich aus mehreren einzelnen Lautsprecher-Modulen besteht, die jedoch physikalisch in einer Einheit zusammengefasst sind.

Zwischen dem Wellenfeldsynthesemodul 10 und jedem einzelnen Lautsprecher-Modul 12a-12e befindet sich eine eigene Übertragungsstrecke 16a-16e, wobei jede Übertragungsstrecke mit dem zentralen Wellenfeldsynthesemodul und einem eigenen Lautsprecher-Modul gekoppelt ist.

Als Datenübertragungsmodus zum Übertragen von Daten von dem Wellenfeldsynthesemodul zu einem Lautsprecher-Modul wird ein serielles Übertragungsformat bevorzugt, das eine hohe Datenrate liefert, wie beispielsweise ein sogenanntes Firewire-Übertragungsformat oder ein USB-Datenformat. Datenübertragungsraten von über 100 Megabit pro Sekunde sind vorteilhaft.

Der Datenstrom, der von dem Wellenfeldsynthesemodul 10 zu einem Lautsprecher-Modul übertragen wird, wird somit je nach gewähltem Datenformat in dem Wellenfeldsynthesemodul entsprechend formatiert und mit einer Synchronisationsinformation versehen, die in üblichen seriellen Datenformaten vorgesehen ist. Diese Synchronisationsinformation wird von den einzelnen Lautsprecher-Modulen aus dem Datenstrom extrahiert und verwendet, um die einzelnen Lautsprecher-Module im Hinblick auf ihre Wiedergabe, also letztendlich auf die Analog-Digital-Wandlung zum Erhalten des analogen Lautsprechersignals und die dafür vorgesehene Abtastung (resampling) zu synchronisieren. Das zentrale Wellenfeldsynthesemodul arbeite als Master, und alle Lautsprecher-Module arbeiten als Clients, wobei die einzelnen Datenströme über die verschiedenen Übertragungsstrecken 16a-16e alle dieselben Synchronisationsinformationen von dem Zentralmodul 10 erhalten. Dies stellt sicher, dass alle Lautsprecher-Module synchron, und zwar synchronisiert von dem Master 10, arbeiten, was für das Audiowiedergabesystem wichtig ist, um keinen Verlust an Audioqualität zu erleiden, damit die vom Wellenfeldsynthesemodul berechneten Synthesesignale nicht zeitversetzt von den einzelnen Lautsprechern nach entsprechendem Audio-Rendering abgestrahlt werden.

Das beschriebene Konzept liefert zwar bereits eine deutliche Flexibilität im Hinblick auf ein Wellenfeldsynthese-System, das für verschiedene Anwendungsmöglichkeiten skalierbar ist. Es leidet jedoch nach wie vor an der Problematik, dass das zentrale Wellenfeldsynthese-Modul, das das eigentliche Haupt-Rendering durchführt, das also abhängig von den Positionen der virtuellen Quellen und abhängig von den Lautsprecherpositionen die einzelnen Synthese-Signale für die Lautsprecher berechnet, einen "Flaschenhals" für das gesamte System darstellt. Obgleich bei diesem System das "Nach-Rendering", also die Beaufschlagung der Synthesesignale mit Kanalübertragungsfunktionen, etc. bereits dezentral ausgeführt wird und somit bereits die notwendige Datenübertragungskapazität zwischen dem zentralen Renderer-Modul und den einzelnen Lautsprecher-Modulen durch Selektion von Synthesesignalen mit einer kleineren Energie als einer bestimmten Schwellenenergie reduziert worden ist, müssen jedoch dennoch alle virtuellen Quellen gewissermaßen für alle Lautsprechermodule gerendert werden, also in Synthesesignale umgerechnet werden, wobei die Ausselektion erst nach dem Rendering stattfindet.

Dies bedeutet, dass das Rendering nach wie vor die Gesamtkapazität des Systems bestimmt. Ist die zentrale Rendering-Einheit daher z. B. in der Lage, 32 virtuelle Quellen gleichzeitig zu rendern, also für diese 32 virtuellen Quellen die Synthesesignale gleichzeitig zu berechnen, so treten ernsthafte Kapazitätsengpässe auf, wenn mehr als 32 Quellen zu einem Zeitpunkt in einer Audioszene aktiv sind. Für einfache Szenen ist dies ausreichend. Für komplexere Szenen, insbesondere mit immersiven Klangeindrücken, also wenn es beispielsweise regnet und viele Regentropfen einzelne Quellen darstellen, ist es ummittelbar einsichtig, dass die Kapazität mit maximal 32 Quellen nicht mehr ausreicht. Eine entsprechende Situation findet auch dann statt, wenn man ein großes Orchester hat und tatsächlich jeden Orchesterspieler oder wenigstens jede Instrumentengruppe als eigene Quelle an ihrer eigenen Position verarbeiten möchte. Hier können 32 virtuelle Quellen sehr schnell zu wenig werden.

Typischerweise wird bei dem bekannten Wellenfeldsynthese-Konzept eine Szenenbeschreibung verwendet, in der die einzelnen Audioobjekte derart zusammen definiert sind, dass unter Verwendung der Daten in der Szenenbeschreibung und der Audiodaten für die einzelnen virtuellen Quellen die komplette Szene durch einen Renderer bzw. eine Multi-Rendering-Anordnung aufbereitet werden kann. Hierbei ist für jedes Audioobjekt exakt definiert, wo das Audioobjekt zu beginnen hat und wo das Audioobjekt zu enden hat. Ferner ist für jedes Audioobjekt genau die Position der virtuellen Quelle angegeben, an der die virtuelle Quelle sein soll, die also in die Wellenfeldsynthese-Rendering-Einrichtung einzugeben ist, damit für jeden Lautsprecher die entsprechenden Synthesesignale erzeugt werden. Dies hat zur Folge, dass durch Überlagerung der von den einzelnen Lautsprechern als Reaktion auf die Synthesesignale ausgegebenen Schallwellen für einen Hörer ein Eindruck entsteht, als ob eine Schallquelle an einer Position im Wiedergaberaum bzw. außerhalb des Wiedergaberaums positioniert ist, die durch die Quellenposition der virtuellen Quelle definiert ist.

Typischerweise sind die Kapazitäten des Wellenfeldsynthese-Systems begrenzt. Dies führt dazu, dass jeder Renderer eine begrenzte Rechenkapazität hat. Typischerweise ist ein Renderer in der Lage, 32 Audioquellen gleichzeitig zu verarbeiten. Ferner hat ein Übertragungsweg von dem Audioserver zum Renderer eine begrenzte Übertragungsbandbreite, also liefert eine maximale Übertragungsrate in Bit pro Sekunde.

Für einfache Szenen, in denen z. B. nur, wenn an einen Dialog gedacht wird, zwei virtuelle Quellen existieren, wobei zusätzlich noch für ein Hintergrundgeräusch eine weitere virtuelle Quelle vorhanden ist, ist die Verarbeitungskapazität des Renderers, der ja z. B. 32 Quellen gleichzeitig verarbeiten kann, unproblematisch. Ferner ist in diesem Fall das Übertragungsvolumen zu einem Renderer so klein, dass die Kapazität der Übertragungsstrecke ausreichend ist.

Probleme werden jedoch dann auftreten, wenn komplexere Szenen wiederzugeben sind, also Szenen, die mehr als 32 virtuelle Quellen haben. In einem solchen Fall, der beispielsweise auftritt, um eine Szene im Regen korrekt wiederzugeben, oder um eine Applausszene naturgetreu wiederzugeben, wird die maximale Rechenkapazität eines Renderers, der auf 32 virtuelle Quellen begrenzt ist, schnell nicht mehr ausreichend sein. Dies liegt daran, dass sehr viele einzelne virtuelle Quellen existieren, da z. B. in einer Zuhörerschaft prinzipiell jeder Zuhörer, der klatscht, als eigene virtuelle Quelle an einer eigenen virtuellen Position aufgefasst werden kann. Um mit dieser Begrenzung umzugehen, existieren mehrere Möglichkeiten. So besteht eine Möglichkeit darin, bereits beim Erstellen der Szenenbeschreibung darauf zu achten, dass niemals ein Renderer gleichzeitig 32 Audioobjekte verarbeiten muss.

Insbesondere wenn an eine Kapazitätsvergrößerung der Wellenfeldsynthese-Verarbeitung gedacht wird, wenn also eine große Anzahl von virtuellen Quellen durch einzelne oder mehrere Renderer-Module aufbereitet werden sollen, wird es irgendwann zu Kapazitätsengpässen kommen. Dies liegt daran, dass ein typischer Renderer nur eine bestimmte maximale Anzahl von virtuellen Quellen gleichzeitig verarbeiten kann. Diese Anzahl kann beispielsweise bei 32 liegen. Die maximale Verarbeitungskapazität eines Renderers ist jedoch nicht der einzige Flaschenhals eines Systems. So muss ein Renderer dann, wenn er z. B. 32 virtuelle Quellen gleichzeitig verarbeiten soll, auch mit den entsprechenden Audiodateien für die 32 virtuellen Quellen gleichzeitig versorgt werden. Typischerweise hat ein Renderer einen Eingangspuffer, der die Anforderungen an die Datenübertragung zwar etwas entzerrt, der jedoch insbesondere dann, wenn der Renderer sehr viele Quellen gleichzeitig verarbeitet, wenn also sehr viele Daten vom Puffer genommen werden, auch entsprechend schnell gefüllt werden muss.

Ist die Datenübertragungs-Infrastruktur so gestaltet, dass sie mit der Datennachlieferung nicht mehr hinterherkommt, so gehen dem Renderer gewissermaßen Daten zum Aufbereiten aus. Der Renderer könnte eine solche Situation noch etwas kompensieren, indem er einfach die letzten Daten so lange wiederholt, bis neue Daten ankommen. Dies ist jedoch in der Datenverwaltung aufwendig und kann zu hörbaren Artefakten führen. Diese Artefakte werden schlimmer sein, wenn die virtuelle Quelle eine Quelle mit einer deterministischen Information ist, wie beispielsweise Sprache, Musik, etc. Weniger kritisch wird diese Wiederholung von vorhandenen Daten sein, wenn die virtuelle Quelle eine Rauschquelle oder allgemein gesagt eine Geräuschquelle ist. Allerdings ist auch eine Unterscheidung hierbei problematisch, und zwar insbesondere in dem Kontext, dass solche "zusätzlichen" Aufgaben für einen Renderer eigentlich genau dann durchzuführen wären, wenn der Renderer ohnehin bereits an seiner maximalen Auslastungsgrenze fährt, was ja letztendlich die Ursache für das "Ausgehen" der zu rendernden Audiodaten war.

Die Aufgabe der vorliegenden Erfindung besteht darin, ein Konzept zum Speichern von Audiodateien zu schaffen, das eine höher qualitative und einfacher implementierbare Wellenfeldsynthese ermöglicht.

Diese Aufgabe wird durch eine Vorrichtung zum Speichern von Audiodateien nach Patentanspruch 1, ein Verfahren zum Speichern von Audiodateien nach Patentanspruch 13 und ein Computer-Programm nach Patentanspruch 14 gelöst.

Der vorliegenden Erfindung liegt die Erkenntnis zugrunde, dass eine effiziente Datenorganisation entscheidend ist, dass ein Renderer auch dann, wenn er an seiner Auslastungsgrenze arbeitet, mit genügend Daten versorgt wird. Typischerweise werden die Daten, mit denen der Renderer versorgt wird, aus einem Speichergerät ausgelesen, wie beispielsweise einer Festplatte eines PC oder einer Workstation.

Es wurde jedoch herausgefunden, dass die Zugriffszeiten auf die Audiodateien wesentlich davon abhängen, wie die Audiodateien auf dem Speichermedium in dem Speichergerät gespeichert sind. Ein dauerndes Springen des Schreib/Lese-Kopfes der Festplatte führt dazu, dass die Auslese-Performance des Speichergeräts so stark abnimmt, dass in bestimmten Situationen nicht mehr sichergestellt werden kann, dass ein Renderer mit ausreichend Daten versorgt wird. So wurde ferner herausgefunden, dass dies insbesondere in einer Szene der Fall sein kann, in der der Renderer ohnehin an seiner Auslastungsgrenze oder nahe an seiner Auslastungsgrenze arbeitet. Dagegen ist die Situation dann unproblematischer, wenn der Renderer in einer anderen Szene nicht so sehr an seiner Auslastungsgrenze arbeitet und daher auch nicht so viele Daten benötigt. Hier sind daher Sprünge des Schreib/Lese-Kopfes des Speichergeräts gut hinnehmbar.

Erfindungsgemäß wird daher gewissermaßen als Vorbereitung einer Wellenfeldsynthese-Wiedergabe eine effiziente Speicherung der Audiodateien vorgenommen, wobei eine Szenen-übergreifende Speicheroptimierung angewendet wird. So werden die Szenenbeschreibungen untersucht, um eine erste Szene herauszufinden, die eine höhere Verarbeitungskapazität des Wellenfeldsynthese-Systems fordert als eine andere zweite Szene. Dann wird die Schreibeinrichtung des Speichergeräts so gesteuert, dass sie die Audiodateien, die durch die Szenenbeschreibung der ersten Szene identifiziert sind, so auf das Speichergerät schreibt, dass eine Leseeinrichtung des Speichergeräts die Audiodateien für die erste Szene schneller auslesen kann als wenn die Audiodateien für die erste Szene rein zufällig auf dem Speichergerät gespeichert sind. Im Gegensatz zu einer normalen Festplattenumgebung, bei der Dateien immer dort auf der Festplatte gespeichert werden, wo der Lesekopf gerade ist, also in einer gewissen zufälligen Art und Weise, werden erfindungsgemäß die Audiodateien für die Szene, die das Wellenfeldsynthese-System stark auslastet, optimiert geschrieben, was natürlich dazu führt, dass die Audiodateien für andere Szenen nicht optimal geschrieben werden. Dies ist jedoch dahingehend unproblematisch, da bei anderen Szenen ein Speichergerät mehr Zugriffszeit haben kann, da die für die andere Szene erforderliche Datenübertragungsrate ohnehin nicht so hoch ist, da weniger virtuelle Quellen parallel zu verarbeiten sind.

Bei einem bevorzugten Ausführungsbeispiel der vorliegenden Erfindung wird insbesondere für Audiodateien, die in mehreren Szenen verwendet werden, eine Speicherung der Audiodateien auf dem Speichergerät so vorgenommen, dass der Speicherzugriff für die Szene, die die höchste Auslastung des Wellenfeldsynthese-Systems mit sich bringt, optimal geschrieben ist, während viele Sprünge für andere Szenen, die auf dieselbe Audiodatei zugreifen, in Kauf genommen werden.

In einem Speichergerät mit mehreren parallel verwendbaren Einzelspeichermedien, wie beispielsweise einem RAID-Array, wird es bevorzugt, parallel zu verwendende Audiodateien auf parallelen Einzelspeichermedien abzuspeichern, damit sie für die Szene, wo ohnehin ein Kapazitätsproblem vorherrscht, maximal schnell ausgelesen werden, während für andere Szenen gleichzeitig zu verarbeitende Audiodateien nicht auf getrennten Platten sondern z. B. auf ein und derselben Platte sind, was jedoch im Hinblick auf die dort ohnehin nicht so hohe Auslastung unkritisch ist.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild des erfindungsgemäßen Kon- zepts zum Speichern von Audiodateien;
- Fig. 1b: ein beispielhaftes Audiostück mit Szenen unter- schiedlicher Wellenfeldsynthese-System- Auslastung;
- Fig. 1c: ein erstes Beispiel für eine optimierte Szenen- übergreifende Speicherung;
- Fig. 1d: ein zweites Beispiel für eine optimierte Szenen- übergreifende Speicherung;
- Fig. 2: ein beispielhaftes Audioobjekt;
- Fig. 3: eine beispielhafte Szenenbeschreibung;
- Fig. 4: einen Bitstrom, in dem jedem Audioobjekt ein Hea- der mit den aktuellen Zeitdaten und Positionsda- ten zugeordnet ist;
- Fig. 5: eine Einbettung des erfindungsgemäßen Konzepts in ein Wellenfeldsynthese-Gesamtsystem;
- Fig. 6: eine schematische Darstellung eines bekannten Wellenfeldsynthese-Konzepts; und
- Fig. 7: eine weitere Darstellung eines bekannten Wellen- feldsynthese-Konzepts.

Fig. 1 zeigt eine erfindungsgemäße Vorrichtung zum Speichern von Audiodateien für ein Audiostück in einem Speichergerät mit einer Schreibeinrichtung und einer Leseeinrichtung, die bei dem in Fig. 1a gezeigten Ausführungsbeispiel als gemeinsamer Schreib/Lese-Kopf 2 ausgebildet ist. Das Audiostück soll durch einen Renderer eines Wellenfeldsynthese-Systems 3 aufbereitet werden. Das Audiostück umfasst insbesondere mehrere Szenen, wobei für jede Szene eine eigene Szenenbeschreibung vorgesehen ist, und wobei eine Szene eine zeitliche Folge von Audioobjekten der Szene aufweist. Insbesondere umfasst ein Audioobjekt Informationen über eine virtuelle Quelle und eine Identifikation für eine dem Audioobjekt zugeordnete Audiodatei.

Erfindungsgemäß ist eine Einrichtung 4 zum Untersuchen der Szenenbeschreibungen und zum Ermitteln einer ersten Szene, die eine höhere Verarbeitungskapazität des Wellenfeldsynthese-Systems fordert als eine zweite Szene vorgesehen. Hierzu können, wie es in Fig. 1a gezeigt ist, der Einrichtung 4 gegebenenfalls Informationen über das Wellenfeldsynthese-System 3 und insbesondere über die aktuelle Auslastung des Renderers im Wellenfeldsynthese-System zugeführt werden. Die Einrichtung 4 steuert eine Steuereinrichtung 5. Die Steuereinrichtung 5 ist ausgebildet, um den Schreib-Lese-Kopf 2 so zu steuern, dass Audiodateien, die durch die Szenenbeschreibung der ersten Szene identifiziert werden, also Audiodateien für die Szene mit höherer Auslastung, so auf dem Speichergerät 1 geschrieben werden, dass die Leseeinrichtung 2 die Audiodateien für die erste Szene schneller auslesen kann als wenn die Audiodateien für die erste Szene zufällig auf dem Speichergerät gespeichert worden wären. Die Audiodateien kommen vorzugsweise von einem weiteren Speichergerät 6, das eine CD oder DVD sein kann und werden entweder direkt über die Steuereinrichtung auf das Speichergerät geschrieben oder werden gesteuert von der Steuereinrichtung direkt von dem zusätzlichen Speicher 6 dem Schreib-Lese-Kopf 2 des Speichergeräts 1 natürlich in der richtigen Reihenfolge, wie sie durch die Steuereinrichtung 5 bestimmt worden ist, zugeführt.

Die Steuereinrichtung 5 ist insbesondere ausgebildet, um das Speichergerät 1, das z. B. eine Festplatte ist, so zu beschreiben, dass auf jeden Fall keine Fraktionierung auftritt, dass also alle Audiodateien durchgehend geschrieben werden. Ferner ist die Steuereinrichtung ausgebildet, um Audiodateien an bestimmten Stellen in der Festplatte zu schreiben. Es wird also das Abspeichern, also das tatsächliche Beschreiben der physischen Festplatte, nicht mehr, wie in herkömmlichen Festplatten, der Festplattensteuerung allein bzw. dem Zufall überlassen. Statt dessen ist die Steuereinrichtung 5 ausgebildet, um den Schreib-Lese-Kopf 2 des Speichergeräts 1 genau so zu steuern, dass Audiodateien genau in einer bestimmten Reihenfolge und Anordnung auf dem Speichergerät gespeichert werden. Damit wird sichergestellt, dass dann, wenn das Wellenfeldsynthese-System ein Audiostück abspielen soll, der Lesekopf zumindest für die Szenen, bei denen das Wellenfeldsynthese-System ohnehin an seiner Auslastungsgrenze arbeitet, möglichst schnell auslesen kann, also z. B. entlang einer Spur ohne dazwischen auftretende Sprünge eine Audiodatei nach der anderen lesen und dem Wellenfeldsynthese-System 3 zuführen kann. Dagegen werden für andere Szenen, wie es noch Bezug nehmend auf Fig. 1d beschrieben wird, Sprünge in Kauf genommen, was jedoch für diese Szenen nicht so schlimm ist, da ohnehin die zum Renderer zu übertragenden Daten nicht so voluminös sind.

An dieser Stelle sei darauf hingewiesen, dass aufgrund der inhärenten Dynamik von Audiostücken insbesondere bei anspruchsvollen Audioszenen, wie sie erfindungsgemäß verarbeitet werden sollen, die Auslastung des Wellenfeldsynthese-Systems keineswegs konstant ist. Stattdessen wird sich das Auslastungsprofil durch eine außerordentlich hohe Dynamik auszeichnen. So werden genauso Szenen vorhanden sein oder Abschnitte in Szenen, bei denen die Auslastung sehr gering ist, während dann unmittelbar anschließend die Auslastung sofort an die Maximalgrenze gehen kann. Eine solche Situation kann man sich dann gut vorstellen, wenn ein Musikstück von einem Instrument (nur eine Quelle) verklingt und dann unmittelbar der Applaus (sehr viele verschiedene Quellen) des Publikums startet.

Erfindungsgemäß werden die Audiodateien Szenen-übergreifend optimiert gespeichert. Hierzu wird untersucht, welche Audiodateien überhaupt benötigt werden, wenn eine Szene mit hoher Auslastung abgespielt wird, um dann eben genau diese Audiodateien optimiert abzuspeichern.

Wie es in Fig. 1a gezeigt ist, umfasst ein Wellenfeldsynthese-System 3 als zentrales Element einen Renderer oder mehrere Renderer-Module. Angesteuert werden die Renderer typischerweise von einem Scheduler, welcher vorzugsweise ausgebildet ist, um unter Verwendung gegebenenfalls vorgesehener Audioobjektmanipulationen die Datenströme für die Renderer zu erzeugen. Der Scheduler ist somit dafür verantwortlich, die Daten schnell aus dem Speichergerät 1 auszulesen und dem nachgeordneten Renderer zuzuführen, welcher dann aus den Audiodateien Synthesesignale erzeugt, die den einzelnen Lautsprechern im Lautsprecherarray zugeführt werden.

Das erfindungsgemäße Abspeichern der Audiodateien in Szenen-übergreifend optimierter Form dient also einer Vorbereitung der eigentlichen Wellenfeldsynthese-Aufbereitung, die in Fig. 1a auch mit "Abspielen" bezeichnet ist. Das erfindungsgemäße Szenen-übergreifend optimierte Speichern dient also dazu, dass beim Abspielen ein schnelles Datenauslesen stattfinden kann, das so schnell ist, dass zumindest die Speicherschnittstelle nicht der Flaschenhals der Wellenfeldsynthese-Verarbeitung sein wird.

Fig. 1b zeigt ein beispielhaftes Audiostück mit einer ersten Szene und einer zweiten Szene, wobei in der ersten Szene parallel vier Quellen bzw. vier Audiodateien AD1, AD2, AD3, AD4 aufbereitet werden müssen, während in der zweiten Szene höchstens drei Audiodateien parallel aufbereitet werden müssen, nämlich AD6, AD7 und AD1.

Erfindungsgemäß wird nachfolgend anhand von Fig. 1c eine Speicheroptimierung dargestellt, die für mehrere parallele Platten ausgebildet ist. So wird als Priorität genommen, dass die Audiodateien der ersten Szene optimal gespeichert werden, was dazu führt, dass die Audiodateien AD1, AD2 auf der Platte 1 gespeichert werden und die Audiodateien AD3, AD4 auf der Platte 2. Diese Speicherung ist, wie es aus Fig. 1c zu sehen ist, für die zweite Szene nachteilhaft, da dort AD1 und AD7 gleichzeitig benötigt werden, da diese beiden Audiodateien parallel zueinander aufbereitet werden. Dennoch sind beide Dateien auf derselben Platte 1 gespeichert und ferner noch durch die Audiodatei AD2 voneinander getrennt. Zum Auslesen der Audiodateien für die zweite Szene wird die Festplatte daher einige Sprünge machen müssen und kann ferner nicht von der parallelen Anordnung von Platte 1 und Platte 2 profitieren. Allerdings ist dies auch unkritisch, da die Datenanforderung in der zweiten Szene ohnehin geringer ist als in der ersten Szene, da in der zweiten Szene die Auslastung des Wellenfeldsynthese-Systems geringer als in der ersten Szene ist.

Fig. 1d zeigt eine Anordnung der Audiodateien auf einer Spur 7 auf einem Speichermedium, wie beispielsweise einer Festplatte. Beispielhaft zeigt Fig. 1d eine serielle Anordnung auf einem einzigen Speichermedium im Gegensatz zum Parallel-Speichermedium von Fig. 1c. So ist zu sehen, dass die Audiodateien der ersten Szene nacheinander abgespeichert sind, sodass ein Lesekopf nicht springen muss, um die Audiodateien der ersten Szene einzulesen. Dies führt zu einer sehr schnellen Datenbereitstellung der Audiodateien AD1 bis AD4.

Zum Einlesen der Audiodateien der zweiten Szene sind jedoch einige Sprünge erforderlich. So muss der Lesekopf des Speichergeräts nach dem Einlesen der Audiodatei AD5 zur Audiodatei AD2 springen, um dann, nachdem die Audiodatei AD2 eingelesen worden ist, wieder zurück zur Audiodatei AD6 zu springen. Ähnlich ist die Situation auch dann, wenn nach der Audiodatei AD7 die Audiodatei AD1 eingelesen werden muss.

So ist zu sehen, dass bei dem in Fig. 1d gezeigten Ausführungsbeispiel zum Einlesen der ersten Szene keinerlei Sprünge des Lesekopfs benötigt werden, während zum Einlesen der zweiten Szene bereits vier Sprünge des Lesekopfs benötigt werden, die den Zugriff auf die Daten im Speichergerät verlangsamen, was jedoch für die zweite Szene wesentlich weniger kritisch ist als für die erste Szene, bei der es von hoher Bedeutung ist, dass die Daten reibungslos ausgelesen werden, damit dem Renderer zum Aufbereiten der ersten Szene nicht die Daten ausgehen.

Erfindungsgemäß wird also der Tatsache Rechnung getragen, dass die Datenorganisation für die effiziente Datenausgabe entscheidend ist. Die notwendige Transferrate zum Speisen eines Renderers kann von Medien von CD oder DVD bei vielen Ausführungsbeispielen nicht gewährleistet werden. Daher ist eine Festplatten-basierte Verwaltung notwendig. Erfindungsgemäß wird für komplexe Szenen eine Optimierung des Speicherlayouts vorgenommen, um die Einhaltung der Zeitforderungen zu garantieren.

Erfindungsgemäß wird somit eine effiziente Auslieferung der Audio- und Metadaten einerseits und eine effiziente Datenorganisation andererseits erreicht. So lässt sich über die Metadaten die Abspielreihenfolge der Audiodaten entsprechend der objektorientierten Szenenbeschreibung festlegen. Ist die Abspielreihenfolge bekannt, so kann der Zugriff auf die Audiodaten beim Abspielen optimiert werden. Der Rechner muss sich nicht mehr an beliebigen Stellen auf der Festplatte oder anderen Speichermedien die Audiodaten "zusammensuchen", sondern ist in der Lage, die Audiodaten hintereinander wegzulesen, ohne dass der Lesezugriff große Sprünge im Speicher erfordert. Durch die Reduktion des Aufwands beim Lesezugriff auf die Audiodaten ist es möglich, die Ressourcen effizienter zu nutzen und somit mehr Audioobjekte gleichzeitig in Echtzeit zu verarbeiten.

Bei der Datenorganisation wird es bevorzugt, eine zentrale Datenbank zu verwenden. Durch die zentrale Organisation wird die Konsistenz der Audio- und Metadaten gewährleistet. Des weiteren erleichtert der Einsatz einer Datenbank die Produktion von Wellenfeldsynthese-Szenen erheblich. So wird es bevorzugt, eine Datenbank einzusetzen, die einen Suchmechanismus zum Finden bestimmter Daten in der Datenbank erlaubt. Damit wird eine Szenen-übergreifende Wiederverwendbarkeit von Audioobjekten geschaffen. Audiodaten können so beispielsweise in mehreren Szenen gleichermaßen verwendet werden, ohne dass diese beim Erstellen einer neuen Szene erneut importiert werden müssen. Weiterhin lässt sich mit Hilfe der Datenbank die Versionierung von Audio- und Metadaten realisieren. Dies erlaubt es, dass der Nutzer den Zugriff auf ältere Versionen seiner Szenenbeschreibung erhält, was den Produktionsprozess ebenfalls erleichtert.

An dieser Stelle sei darauf hingewiesen, dass das Speichergerät nicht unbedingt eine zentrale Datenbank sein muss, sondern als ganz normaler Datei-Server ausgeführt sein kann. Es wird jedoch bevorzugt, eine Audiodatenbank einzusetzen, die insbesondere dann von Vorteil ist, wenn bestimmtes Audiomaterial von verschiedenen unterschiedlichen Szenen verwendet wird. So kennt die Audiodatenbank alle Szenen und weiß, welche Szenen welches Audiomaterial wann verwenden. Ferner hat die Audiodatenbank Zugriff auf die Audiodaten und kann die Speicherfolge der Audiodaten auf der Festplatte bestimmen. Außerdem kann die Audiodatenbank eine optimale Szenen-übergreifende Speicherreihenfolge für die Audiodaten erstellen. Schließlich kann die Audiodatenbank auch Engpässe entdecken und bei der Abspeicherung der Audiodaten entsprechend darauf reagieren.

Erfindungsgemäß kann dies alternativ auch darüber realisiert werden, dass man alle Szenendateien an einer zentralen Stelle speichert und ein Programm realisiert, das alle Szenendateien ausliest und daraus die Speicherreihenfolge der Audiodateien auf dem Server ableitet. Eine Datenbank erzwingt jedoch die zentrale Speicherung der Szenendateien, welche für die Optimierung der Reihenfolge der Speicherung der Audiodateien bevorzugt wird.

Erfindungsgemäß wird also eine zeitliche und räumliche Anordnung von Audioquellen und eine daraus folgende Optimierung der Speicherreihenfolge der Audiodaten auf dem Speichermedium vorgenommen. Hierzu wird eine Szenen-übergreifende Optimierung der Daten verwendet, die vorzugsweise auf eine zentrale Speicherung und Verwaltung von Szenen zurückgreift.

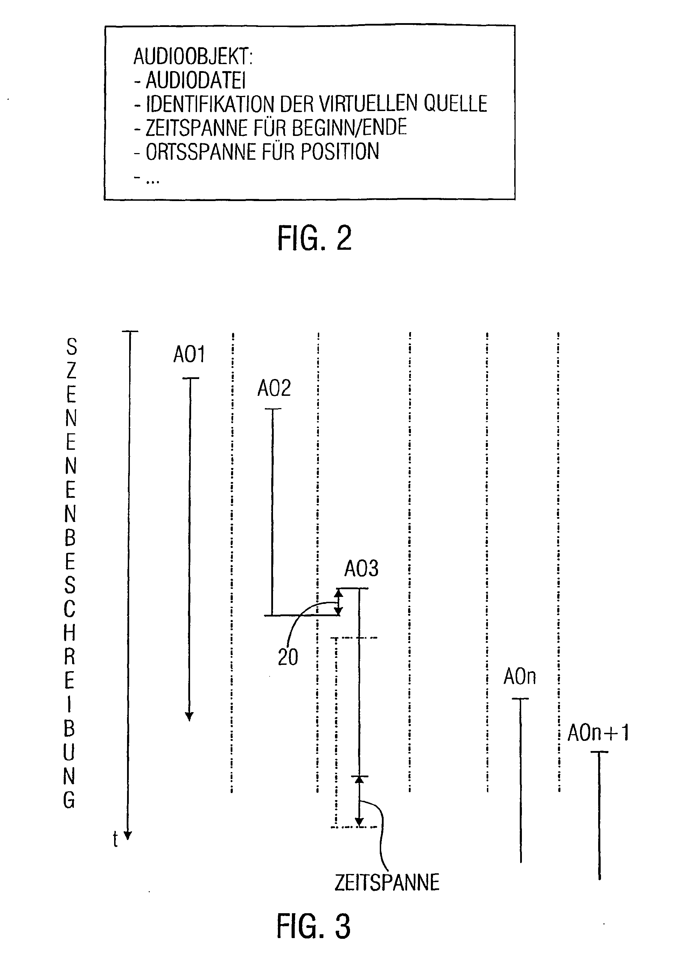

Nachfolgend wird Bezug nehmend auf Fig. 2 auf Informationen hingewiesen, die ein Audioobjekt vorteilhaft haben sollte. So soll ein Audioobjekt die Audiodatei spezifizieren, die gewissermaßen den Audioinhalt einer virtuellen Quelle darstellt. So muss das Audioobjekt jedoch nicht die Audiodatei umfassen, sondern kann einen Index haben, der auf eine definierte Stelle in einer Datenbank verweist, an der die tatsächliche Audiodatei gespeichert ist.

Ferner umfasst ein Audioobjekt vorzugsweise eine Identifikation der virtuellen Quelle, die beispielsweise eine Quellennummer oder ein aussagefähiger Dateiname etc. sein kann. Ferner spezifiziert das Audioobjekt bei der vorliegenden Erfindung eine Zeitspanne für den Beginn und/oder das Ende der virtuellen Quelle, also der Audiodatei. Wird nur eine Zeitspanne für den Beginn spezifiziert, so bedeutet dies, dass der tatsächliche Startpunkt der Aufbereitung dieser Datei durch den Renderer innerhalb der Zeitspanne verändert werden kann. Wird zusätzlich eine Zeitspanne für das Ende vorgegeben, so bedeutet dies, dass auch das Ende innerhalb der Zeitspanne variiert werden kann, was insgesamt je nach Implementierung zu einer Variation der Audiodatei auch hinsichtlich ihrer Länge führen wird. Jegliche Implementierungen sind möglich, so z. B. auch eine Definition der Start/Endzeit einer Audiodatei so, dass zwar der Startpunkt verschoben werden darf, dass jedoch auf keinen Fall die Länge verändert werden darf, sodass damit automatisch das Ende der Audiodatei ebenfalls verschoben wird. Insbesondere für Geräusche wird es jedoch bevorzugt, auch das Ende variabel zu halten, da es typischerweise nicht problematisch ist, ob z. B. ein Windgeräusch etwas früher oder später anfängt, oder ob es etwas früher oder später endet. Weitere Spezifizierungen sind je nach Implementierung möglich bzw. erwünscht, wie beispielsweise eine Spezifikation, dass zwar der Startpunkt variiert werden darf, nicht jedoch der Endpunkt, etc.

Vorzugsweise umfasst ein Audioobjekt ferner eine Ortsspanne für die Position. So wird es für bestimmte Audioobjekte keine Rolle spielen, ob sie z. B. von vorne links oder vorne Mitte kommen, oder ob sie um einen (kleinen) Winkel bezüglich eines Bezugspunkts im Wiedergaberaum verschoben werden. So existieren jedoch auch, wie es ausgeführt worden ist, Audioobjekte insbesondere wieder aus dem Geräuschbereich, die an jeder beliebigen Stelle positioniert werden können und damit eine maximale Ortsspanne haben, die beispielsweise durch einen Code für "beliebig" oder durch keinen Code (implizit) im Audioobjekt spezifiziert werden kann.

Ein Audioobjekt kann weitere Informationen umfassen, wie beispielsweise eine Angabe über die Art der virtuellen Quelle, also ob es sich bei der virtuellen Quelle um eine Punktquelle für Schallwellen handeln muss, oder ob es sich um eine Quelle für ebene Wellen handeln muss, oder ob es sich um eine Quelle handeln muss, die Quellen beliebiger Wellenfront erzeugt, sofern die Renderer-Module in der Lage sind, solche Informationen zu verarbeiten.

Fig. 3 zeigt beispielhaft eine schematische Darstellung einer Szenenbeschreibung, in der die zeitliche Abfolge verschiedener Audioobjekte AO1, .... AOn+1 dargestellt ist. Insbesondere wird auf das Audioobjekt A03 hingewiesen, für das eine Zeitspanne, wie sie in Fig. 3 eingezeichnet ist, definiert ist. So können sowohl der Startpunkt als auch der Endpunkt des Audioobjekts A03 in Fig. 3 um die Zeitspanne verschoben werden. Die Definition des Audioobjekts A03 lautet jedoch dahingehend, dass die Länge nicht verändert werden darf, was jedoch von Audioobjekt zu Audioobjekt variabel einstellbar ist.

So ist zu sehen, dass durch Verschieben des Audioobjekts AO3 in positiver zeitlicher Richtung eine Situation erreicht werden kann, bei der das Audioobjekt A03 erst nach dem Audioobjekt A02 beginnt. Werden beide Audioobjekte auf demselben Renderer abgespielt, so kann durch diese Maßnahme eine kurze Überschneidung 20, die ansonsten vielleicht auftreten würde, vermieden werden. Wäre das Audioobjekt A03 im Stand der Technik bereits das Audioobjekt, das über der Kapazität eines Renderers liegen würde, aufgrund bereits sämtlicher weiterer zu verarbeitender Audioobjekte auf dem Renderer, wie beispielsweise Audioobjekt A02 und Audioobjekt A01, so würde ohne die vorliegende Erfindung eine komplette Unterdrückung des Audioobjekts A03 auftreten, obgleich die Zeitspanne 20 lediglich sehr klein war. Erfindungsgemäß wird das Audioobjekt A03 durch die Audioobjektmanipulationseinrichtung 3 verschoben, sodass keine Kapazitätsüberschreitung und damit auch keine Unterdrückung des Audioobjekts A03 mehr stattfindet.

Bei dem bevorzugten Ausführungsbeispiel der vorliegenden Erfindung wird eine Szenenbeschreibung verwendet, die relative Angaben hat. So wird die Flexibilität dadurch erhöht, dass der Beginn des Audioobjekts A02 nicht mehr in einem absoluten Zeitpunkt gegeben wird, sondern in einem relativen Zeitraum zum Audioobjekt AO1. Entsprechend wird auch eine relative Beschreibung der Ortsangaben bevorzugt, also nicht, dass ein Audioobjekt an einer bestimmten Position xy im Wiedergaberaum anzuordnen ist, sondern z. B. um einen Vektor versetzt zu einem anderen Audioobjekt oder zu einem Referenzobjekt ist.

Dadurch kann die Zeitspanneninformation bzw. Ortsspanneninformation sehr effizient aufgenommen werden, nämlich einfach dadurch, dass die Zeitspanne so festgelegt ist, dass sie zum Ausdruck bringt, dass das Audioobjekt A03 z. B. in einem Zeitraum zwischen zwei Minuten und zwei Minuten und 20 Sekunden nach dem Start des Audioobjekts AO1 beginnen kann.

Eine solche relative Definition der Raum- und Zeitbedingungen führt zu einer datenbankmäßig effizienten Darstellung in Form von Constraints, wie sie z. B. in "Modeling Output Constraints in Multimedia Database Systems", T. Heimrich, 1. internationale Multimedia Modelling Conference, IEEE, 2. Januar 2005 bis 14. Januar 2005, Melbourne, beschrieben ist. Hier wird die Verwendung von Constraints in Datenbanksystemen dargestellt, um konsistente Datenbankzustände zu definieren. Insbesondere werden zeitliche Constraints unter Verwendung von Allen-Beziehungen und räumliche Constraints unter Verwendung von räumlichen Beziehungen beschrieben. Hieraus können günstige Ausgabe-Constraints zu Synchronisationszwecken definiert werden. Solche Ausgabe-Constraints umfassen eine zeitliche oder räumliche Bedingung zwischen den Objekten, eine Reaktion im Falle einer Verletzung eines Constraints und eine Überprüfungszeit, also wann ein solcher Constraint überprüft werden muss.

Bei dem bevorzugten Ausführungsbeispiel der vorliegenden Erfindung werden die räumlichen/zeitlichen Ausgabe-Objekte jeder Szene relativ zueinander modelliert. Die Audioobjektmanipulationseinrichtung erreicht eine Überführung dieser relativen und variablen Definitionen in eine absolute räumliche und zeitliche Ordnung. Diese Ordnung stellt das Ausgabe-Schedule dar, das am Ausgang 6a des in Fig. 1 gezeigten Systems erhalten wird und definiert, wie insbesondere das Renderer-Modul im Wellenfeldsynthesesystem angesprochen wird. Das Schedule ist also ein Ausgabeplan, der die Audiodaten entsprechend der Ausgabebedingungen anordnet.

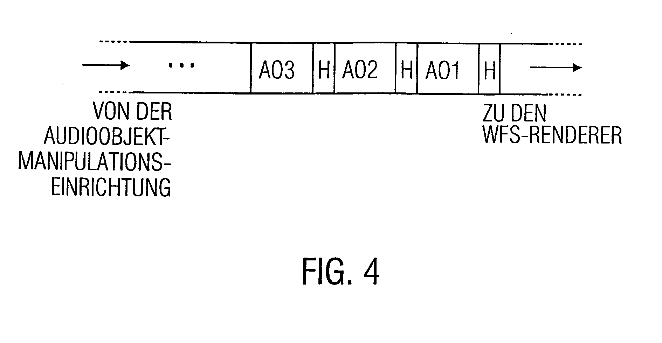

Nachfolgend wird anhand von Fig. 4 ein bevorzugtes Ausführungsbeispiel eines solchen Ausgabe-Schedules dargelegt. Insbesondere zeigt Fig. 4 einen Datenstrom, der gemäß Fig. 4 von links nach rechts übertragen wird, also von der Audioobjekt-Manipulationseinrichtung 3 von Fig. 1 zu einem oder mehreren Wellenfeldsynthese-Renderern des Wellenfeldsystems 0 von Fig. 1. Insbesondere umfasst der Datenstrom für jedes Audioobjekt bei dem in Fig. 4 gezeigten Ausführungsbeispiel zunächst einen Header H, in dem die Positionsinformationen und die Zeitinformationen stehen, und nachgeordnet eine Audiodatei für das spezielle Audioobjekt, die in Fig. 4 mit AO1 für das erste Audioobjekt, A02 für das zweite Audioobjekt etc. bezeichnet ist.

Ein Wellenfeldsynthese-Renderer erhält dann den Datenstrom und erkennt z. B. an einer vorhandenen und fest vereinbarten Synchronisationsinformation, dass nunmehr ein Header kommt. Anhand einer weiteren Synchronisationsinformation erkennt der Renderer dann, dass der Header nunmehr vorbei ist. Alternativ kann für jeden Haeder auch eine feste Länge in Bits vereinbart werden.

Nach dem Empfang des Headers weiß der Audio-Renderer bei dem in Fig. 4 gezeigten bevorzugten Ausführungsbeispiel der vorliegenden Erfindung automatisch, dass die nachfolgende Audiodatei, also z. B. AO1, zu dem Audioobjekt, also zu der Quellenposition gehört, die in dem Header identifiziert ist.

Fig. 4 zeigt eine serielle Datenübertragung zu einem Wellenfeldsynthese-Renderer. Allerdings werden natürlich mehrere Audioobjekte gleichzeitig in einem Renderer abgespielt. Daher benötigt der Renderer einen Eingangs-Puffer, dem eine Datenstrom-Leseeinrichtung vorausgeht, um den Datenstrom zu parsen. Die Datenstromleseeinrichtung wird dann den Header interpretieren und die zugehörigen Audiodaten entsprechend speichern, damit der Renderer dann, wenn ein Audioobjekt zum Rendern an der Reihe ist, die korrekte Audiodatei und die korrekte Quellenposition aus dem Eingangspuffer ausliest. Andere Daten für den Datenstrom sind natürlich möglich. Auch eine separate Übertragung sowohl der Zeit/Orts-Informationen als auch der tatsächlichen Audiodaten kann verwendet werden. Die in Fig. 4 dargestellte kombinierte Übertragung wird jedoch bevorzugt, da sie durch Verkettung der Positions/Zeit-Informationen mit der Audiodatei Datenkonsistenzprobleme eliminiert, da immer sichergestellt wird, dass der Renderer für Audiodaten auch die richtige Quellenposition hat und nicht z. B. noch Audiodaten von einer früheren Quelle rendert, jedoch bereits Positionsinformationen der neuen Quelle zum Rendern verwendet.

Die vorliegende Erfindung basiert somit auf einem objektorientierten Ansatz, dass also die einzelnen virtuellen Quellen als Objekte aufgefasst werden, die sich durch eine Audiodatei und eine virtuelle Position im Raum und möglicherweise durch die Art und Weise der Quelle auszeichnen, also ob sie eine Punktquelle für Schallwellen oder eine Quelle für ebene Wellen oder eine Quelle für anders geformte Quellen sein soll.

Wie es ausgeführt worden ist, ist die Berechnung der Wellenfelder sehr rechenzeitintensiv und an die Kapazitäten der verwendeten Hardware, wie beispielsweise Soundkarten und Rechner, im Zusammenspiel mit der Effizienz der Berechnungsalgorithmen gebunden. Auch die beste ausgestattete PCbasierte Lösung stößt somit bei der Berechnung der Wellenfeldsynthese schnell an ihre Grenzen, wenn viele anspruchsvolle Klangereignisse gleichzeitig dargestellt werden sollen. So gibt die Kapazitätsgrenze der verwendeten Soft- und Hardware die Beschränkung hinsichtlich der Anzahl der virtuellen Quellen bei der Abmischung und Wiedergabe vor.

Fig. 6 zeigt ein solches in seiner Kapazität begrenztes bekanntes Wellenfeldsynthese-Konzept, das ein Authoring-Werkzeug 60, ein Steuer-Renderer-Modul 62 und einen Audioserver 64 umfasst, wobei das Steuer-Renderer-Modul ausgebildet ist, um ein Lautsprecherarray 66 mit Daten zu versorgen, damit das Lautsprecher-Array 66 eine gewünschte Wellenfront 68 durch Überlagerung der Einzelwellen der einzelnen Lautsprecher 70 erzeugt. Das Authoring-Werkzeug 60 erlaubt es dem Nutzer, Szenen zu erstellen, zu editieren und das Wellenfeldsynthese-basierte System zu steuern. Eine Szene besteht sowohl aus Informationen zu den einzelnen virtuellen Audioquellen als auch aus den Audiodaten. Die Eigenschaften der Audioquellen und der Referenzen auf die Audiodaten werden in einer XML-Szenendatei gespeichert. Die Audiodaten selbst werden auf dem Audioserver 64 abgelegt und von dort aus an das Renderer-Modul übertragen. Gleichzeitig erhält das Renderer-Modul die Steuerdaten vom Authoring-Werkzeug, damit das Steuer-Renderer-Modul 62, das zentral ausgeführt ist, die Synthesesignale für die einzelnen Lautsprecher erzeugen kann. Das in Fig. 6 gezeigte Konzept ist in "Authoring System for Wave Field Synthesis", F. Melchior, T. Röder, S. Brix, S. Wabnik und C. Riegel, AES Convention Paper, 115. AES-Versammlung, 10. Oktober 2003, New York, beschrieben.

Wird dieses Wellenfeldsynthese-System mit mehreren Renderer-Modulen betrieben, so wird dabei jeder Renderer mit denselben Audiodaten versorgt, egal, ob der Renderer aufgrund der ihm zugeordneten begrenzten Zahl von Lautsprechern diese Daten für die Wiedergabe benötigt oder nicht. Da jeder der aktuellen Rechner in der Lage ist, 32 Audioquellen zu berechnen, stellt dies die Grenze für das System dar. Andererseits soll die Anzahl der im Gesamtsystem renderbaren Quellen effizient deutlich erhöht werden. Dies ist eine der wesentlichen Voraussetzungen für komplexe Anwendungen, wie beispielsweise Kinofilme, Szenen mit immersiven Atmosphären, wie beispielsweise Regen oder Applaus oder andere komplexe Audioszenen.

Erfindungsgemäß wird eine Reduktion redundanter Datenübertragungsvorgänge und Datenverarbeitungsvorgänge in einem Wellenfeldsynthese-Mehr-Renderer-System erreicht, was zu einer Erhöhung der Rechenkapazität bzw. der Anzahl von gleichzeitig berechenbaren Audioquellen erreicht.

Zur Reduktion der redundanten Übertragung und Verarbeitung von Audio- und Metadaten zum einzelnen Renderer des Mehr-Renderer-Systems wird der Audioserver um die Datenausgabeeinrichtung erweitert, welche in der Lage ist, zu ermitteln, welcher Renderer welche Audio- und Metadaten benötigt. Die Datenausgabeeinrichtung, gegebenenfalls unterstützt durch den Datenmanager benötigt bei einem bevorzugten Ausführungsbeispiel mehrere Informationen. Diese Informationen sind zunächst die Audiodaten, dann Zeit- und Positionsdaten der Quellen und schließlich die Konfiguration der Renderer, also Informationen über die verbundenen Lautsprecher und ihre Positionen sowie deren Kapazität. Mit Hilfe von Datenmanagementtechniken und der Definition von Ausgabebedingungen wird ein Ausgabe-Schedule durch die Datenausgabeeinrichtung mit einer zeitlichen und räumlichen Anordnung der Audioobjekte erzeugt. Aus der räumlichen Anordnung, dem zeitlichen Schedule und der Rendererkonfiguration berechnet das Datenmanagementmodul dann, welche Quelle für welche Renderer zu einem bestimmten Zeitpunkt von Relevanz sind.

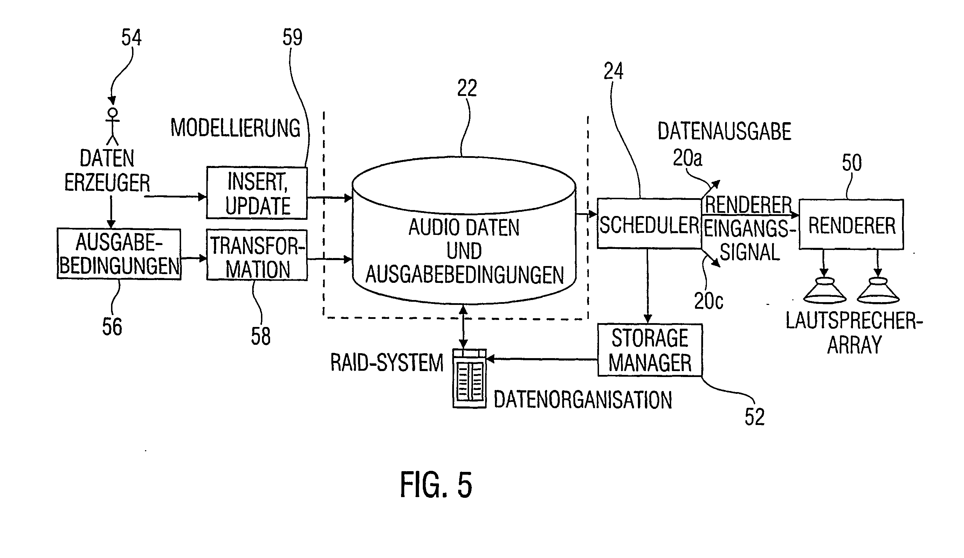

Ein bevorzugtes Gesamtkonzept ist in Fig. 5 dargestellt. Die Datenbank 22 ist ausgangsseitig um die Datenausgabeeinrichtung 24 ergänzt, wobei die Datenausgabeeinrichtung auch als Scheduler bezeichnet wird. Dieser Scheduler erzeugt dann an seinen Ausgängen 20a, 20b, 20c für die verschiedenen Renderer 50 die Renderer-Eingangssignale, damit die entsprechenden Lautsprecher der Lautsprecherarrays versorgt werden.

Vorzugsweise wird der Scheduler 24 noch durch einen Storage-Manager 52 unterstützt, um mittels eines RAID-Systems und entsprechender Datenorganisationsvorgaben die Datenbank 42 zu konfigurieren.

Auf der Eingangsseite steht ein Daten-Erzeuger 54, welcher beispielsweise ein Tonmeister oder ein Audioingenieur sein kann, der eine Audioszene objektorientiert modellieren bzw. beschreiben soll. Hierbei gibt er eine Szenenbeschreibung vor, die entsprechende Ausgabebedingungen 56 umfasst, die dann gegebenenfalls nach einer Transformation 58 zusammen mit Audiodaten in der Datenbank 22 gespeichert werden. Die Audiodaten können mittels eines Insert/Update-Werkzeugs 59 manipuliert und aktualisiert werden.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD, mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Vorrichtung zum Speichern von Audiodateien für ein Audiostück in einem Speichergerät (1) mit einer Schreibeinrichtung und einer Leseeinrichtung (2), wobei das Audiostück durch einen Renderer eines Wellenfeldsynthese-Systems (3) aufbereitet werden soll, wobei das Audiostück mehrere Szenen aufweist, wobei für jede Szene eine Szenenbeschreibung vorgesehen ist, und wobei eine Szene eine zeitliche Folge von Audioobjekten der Szene definiert, wobei ein Audioobjekt Informationen über eine virtuelle Quelle und eine Identifikation für eine dem Audioobjekt zugeordnete Audiodatei aufweist, mit folgenden Merkmalen:
einer Einrichtung (4) zum Untersuchen der Szenenbeschreibung und zum Ermitteln einer ersten Szene, die eine höhere Verarbeitungskapazität des Wellenfeldsynthese-Systems (3) fordert als eine zweite Szene; und
einer Steuereinrichtung (5) zum Steuern der Schreibeinrichtung (2) so, dass Audiodateien, die durch die Szenenbeschreibung der ersten Szene identifiziert werden, so auf dem Speichergerät (1) geschrieben werden, dass die Leseeinrichtung (2) die Audiodateien für die erste Szene schneller auslesen kann als wenn die Audiodateien für die erste Szene zufällig auf dem Speichergerät (1) gespeichert sind.

2. Vorrichtung nach Anspruch 1, bei der ein Audioobjekt der ersten Szene und ein Audioobjekt der zweiten Szene dieselbe Audiodatei identifizieren, und
bei der die Steuereinrichtung (5) ausgebildet ist, um die Schreibeinrichtung (2) so zu steuern, dass die Audiodatei so in dem Speichergerät (1) gespeichert wird, dass die Leseeinrichtung (2) die Audiodatei beim Lesen der Audiodatei, die in der ersten Szene identifiziert wird, mit einer geringeren Zugriffszeit lesen kann als wenn die Audiodatei beim Lesen der Audiodateien für die zweite Szene gelesen wird.

3. Vorrichtung nach Anspruch 1 oder 2, bei der das Speichergerät (1) eine Spur (7) hat, entlang der sich die Leseeinrichtung (2) bewegt, und
bei der die Steuereinrichtung (5) ausgebildet ist, um die Schreibeinrichtung so zu steuern, dass Audiodateien der ersten Szene entlang der Spur geschrieben werden.

4. Vorrichtung nach einem der vorhergehenden Ansprüche, bei der das Speichergerät (1) ein Parallel-Speichergerät mit Einzelzugriffsmedien ist, wobei die Steuereinrichtung (5) ausgebildet ist, um die Schreibeinrichtung (2) so anzusteuern, dass Audiodateien der ersten Szene, die parallel durch den Renderer aufzubereiten sind, auf unterschiedlichen Einzelzugriffsmedien gespeichert werden.

5. Vorrichtung nach Anspruch 3, bei der die Steuereinrichtung (5) ausgebildet ist, um die Schreibeinrichtung (2) so anzusteuern, dass die Audiodateien der ersten Szene gemäß einer zeitlichen Reihenfolge des Auftretens von Audioobjekten der ersten Szene, die die Audiodateien identifizieren, entlang der Spur (7) gespeichert werden.

6. Vorrichtung nach Anspruch 2, bei der das Speichergerät (1) eine Spur hat, entlang der sich die Leseeinrichtung (2) bewegt, und
bei der die Steuereinrichtung (5) ausgebildet ist, um die Schreibeinrichtung (2) so zu steuern, dass die Audiodatei in der Spur unmittelbar vor oder nach einer anderen Audiodatei gespeichert wird, die ein Audioobjekt identifiziert, das von dem Renderer parallel zu dem einen Audioobjekt aufbereitet werden soll, das die Audiodatei identifiziert.

7. Vorrichtung nach einem der vorhergehenden Ansprüche, bei der die Einrichtung (4) zum Überprüfen ausgebildet ist, um die Szene als erste Szene zu ermitteln, die eine höhere Anzahl von durch einen Renderer gleichzeitig aufzubereitenden Audioobjekten hat als eine andere Szene.

8. Vorrichtung nach einem der vorhergehenden Ansprüche, bei der die Einrichtung (4) zum Untersuchen ausgebildet ist, um nur dann eine Szene als erste Szene zu ermitteln, wenn eine szenenbedingte Auslastung des Wellenfeldsynthese-Systems einen vorbestimmten Bruchteil der maximalen Auslastung erreicht.

9. Vorrichtung nach einem der vorhergehenden Ansprüche, bei der die Steuereinrichtung (5) ausgebildet ist, um die Schreibeinrichtung (2) so anzusteuern, dass die Audiodateien der zweiten Szene an noch verbleibenden freien Stellen des Speichergeräts (1) gespeichert werden, nachdem die Audiodateien der ersten Szene auf dem Speichergerät (1) gespeichert sind.

10. Vorrichtung nach einem der vorhergehenden Ansprüche, bei der das Speichergerät (1) eine Festplatte mit einer Speicherscheibe oder mehreren Speicherscheiben ist, wobei für jede Speicherscheibe ein Schreib/Lesekopf (2) vorgesehen ist.

11. Vorrichtung nach einem der vorhergehenden Ansprüche, bei der die Schreibeinrichtung und die Leseeinrichtung als ein und dieselbe physische Komponente (2) ausgebildet sind.

12. Vorrichtung nach einem der vorhergehenden Ansprüche, bei der die Steuereinrichtung (5) ausgebildet ist, um die Schreibeinrichtung (2) so zu steuern, dass Audiodateien, die durch Audioobjekte der ersten Szene identifiziert werden, auf das Speichergerät (1) durchgehend geschrieben werden, ohne dass die Leseeinrichtung beim Lesen der Audiodateien der ersten Szene springen muss.

13. Verfahren zum Speichern von Audiodateien für ein Audiostück in einem Speichergerät (1) mit einer Schreibeinrichtung und einer Leseeinrichtung (2), wobei das Audiostück durch einen Renderer eines Wellenfeldsynthese-Systems (3) aufbereitet werden soll, wobei das Audiostück mehrere Szenen aufweist, wobei für jede Szene eine Szenenbeschreibung vorgesehen ist, und wobei eine Szene eine zeitliche Folge von Audioobjekten der Szene definiert, wobei ein Audioobjekt Informationen über eine virtuelle Quelle und eine Identifikation für eine dem Audioobjekt zugeordnete Audiodatei aufweist, mit folgenden Schritten:
Untersuchen (4) der Szenenbeschreibung und zum Ermitteln einer ersten Szene, die eine höhere Verarbeitungskapazität des Wellenfeldsynthese-Systems (3) fordert als eine zweite Szene; und
Steuern (5) der Schreibeinrichtung (2) so, dass Audiodateien, die durch die Szenenbeschreibung der ersten Szene identifiziert werden, so auf dem Speichergerät (1) geschrieben werden, dass die Leseeinrichtung (2) die Audiodateien für die erste Szene schneller auslesen kann als wenn die Audiodateien für die erste Szene zufällig auf dem Speichergerät (1) gespeichert sind.

14. Computer-Programm mit einem Programmcode zum Ausführen des Verfahrens zum Speichern gemäß Patentanspruch 16, wenn das Computer-Programm auf einem Rechner abläuft.

## Claims

1. Apparatus for storing audio files for an audio piece in a storage device (1) with a writing means and a reading means (2), wherein the audio piece is to be rendered by a renderer of a wave field synthesis system (3), wherein the audio piece comprises several scenes, wherein a scene description is provided for each scene, and wherein a scene defines a temporal sequence of audio objects of the scene, wherein an audio object comprises information on a virtual source and an identification for an audio file associated with the audio object, comprising:
a means (4) for examining the scene description and for determining a first scene demanding a higher processing capacity of the wave field synthesis system (3) than a second scene; and
a control means (5) for controlling the writing means (2) so that audio files being identified by the scene description of the first scene are written on the storage device (1) so that the reading means (2) can read out the audio files for the first scene more quickly than if the audio files for the first scene are randomly stored on the storage device (1).

2. Apparatus according to claim 1, wherein an audio object of the first scene and an audio object of the second scene identify the same audio file, and
wherein the control means (5) is formed to control the writing means (2) so that the audio file is stored in the storage device (1) so that the reading means (2) can read the audio file, when reading the audio file identified in the first scene, with less access time than if the audio file is read when reading the audio files for the second scene.

3. Apparatus according to claim 1 or 2, wherein the storage device (1) comprises a track (7), along which the reading means (2) moves, and
wherein the control means (5) is formed to control the writing means so that audio files of the first scene are written along the track.

4. Apparatus according to one of the preceding claims, wherein the storage device (1) is a parallel storage device with single access media, wherein the control means (5) is formed to control the writing means (2) so that audio files of the first scene, which are to be rendered in parallel by the renderer, are stored on different single access media.

5. Apparatus according to claim 3, wherein the control means (5) is formed to control the writing means (2) so that the audio files of the first scene are stored along the track (7) according to a temporal order of the occurrence of audio objects of the first scene identifying the audio files.

6. Apparatus according to claim 2, wherein the storage device (1) comprises a track, along which the reading means (2) moves, and
wherein the control means (5) is formed to control the writing means (2) so that the audio file is stored in the track immediately in front of or behind another audio file identifying an audio object to be rendered by the renderer in parallel to the one audio object identifying the audio file.

7. Apparatus according to one of the preceding claims, wherein the means (4) for checking is formed to determine, as first scene, the scene comprising a greater number of audio objects to be rendered at the same time by a renderer than another scene.

8. Apparatus according to one of the preceding claims, wherein the means (4) for examining is formed to determine a scene as first scene only if a scene-induced utilization of the wave field synthesis system reaches a predetermined proportion of the maximum utilization.

9. Apparatus according to one of the preceding claims, wherein the control means (5) is formed to control the writing means (2) so that the audio files of the second scene are stored at locations of the storage device (1) still remaining free, after the audio files of the first scene are stored on the storage device (1).

10. Apparatus according to one of the preceding claims, wherein the storage device (1) is a hard disk with one storage disk or several storage disks, wherein a write/read head (2) is provided for each storage disk.

11. Apparatus according to one of the preceding claims, wherein the writing means and the reading means are formed as one and the same physical component (2).

12. Apparatus according to one of the preceding claims, wherein the control means (5) is formed to control the writing means (2) so that audio files identified by audio objects of the first scene are written continuously onto the storage device (1), without the reading means having to jump when reading the audio files of the first scene.

13. Method for storing audio files for an audio piece in a storage device (1) with a writing means and a reading means (2), wherein the audio piece is to be rendered by a renderer of a wave field synthesis system (3), wherein the audio piece comprises several scenes, wherein a scene description is provided for each scene, and wherein a scene defines a temporal sequence of audio objects of the scene, wherein an audio object comprises information on a virtual source and an identification for an audio file associated with the audio object, comprising:
examining (4) the scene description and determining a first scene demanding a higher processing capacity of the wave field synthesis system (3) than a second scene; and
controlling (5) the writing means (2) so that audio files being identified by the scene description of the first scene are written on the storage device (1) so that the reading means (2) can read out the audio files for the first scene more quickly than if the audio files for the first scene are randomly stored on the storage device (1).

14. Computer program with a program code for performing the method for storing according to claim 16, when the computer program is executed on a computer.

## Revendications

1. Dispositif pour mémoriser des fichiers audio pour un morceau audio dans un appareil de mémoire (1) avec un moyen d'écriture et un moyen de lecture (2), le morceau audio devant être traité par un moyen de rendu d'un système de synthèse de champ d'onde (3), le morceau audio présentant plusieurs scènes, pour chaque scène étant prévue une description de scène, et une scène définissant une succession dans le temps d'objets audio, un objet audio présentant des informations sur une source virtuelle et une identification d'un fichier audio associé à l'objet audio, aux caractéristiques suivantes:
un moyen (4) destiné à examiner la description de scène et à déterminer une première scène qui requiert une plus grande capacité de traitement du système de synthèse de champ d'onde (3) qu'une deuxième scène; et
un moyen de commande (5) destiné à commander le moyen d'écriture (2) de sorte que les fichiers audio qui sont identifiés par la description de scène de la première scène soient écrits sur l'appareil de mémoire (1) de manière que le moyen de lecture (2) puisse lire les fichiers audio pour la première scène plus rapidement que lorsque les fichiers audio pour la première scène sont mémorisés de manière aléatoire sur l'appareil de mémoire (1).

2. Dispositif selon la revendication 1, dans lequel un objet audio de la première scène et un objet audio de la deuxième scène identifient le même fichier audio, et
dans lequel le moyen de commande (5) est réalisé de manière à commander le moyen d'écriture (2) de sorte que le fichier audio soit mémorisé dans l'appareil de mémoire (1) de manière que le moyen de lecture (2) puisse lire le fichier audio, lors de la lecture du fichier audio qui est identifié dans la première scène, avec un temps d'accès inférieur que lorsque le fichier audio est lu lors de la lecture des fichiers audio pour la deuxième scène.

3. Dispositif selon la revendication 1 ou 2, dans lequel l'appareil de mémoire (1) a une piste (7) le long de laquelle se déplace le moyen de lecture (2), et
dans lequel le moyen de commande (5) est réalisé de manière à commander le moyen d'écriture de sorte que les fichiers audio de la première scène soient écrits le long de la piste.

4. Dispositif selon l'une des revendications précédentes, dans lequel l'appareil de mémoire (1) est un appareil de mémoire parallèle avec des supports d'accès individuels, le moyen de commande (5) étant réalisé de manière à activer le moyen d'écriture (2) de sorte que les fichiers audio de la première scène devant être traités en parallèle par le moyen de rendu soient mémorisés sur des supports d'accès individuels différents.

5. Dispositif selon la revendication 3, dans lequel le moyen de commande (5) est réalisé de manière à activer le moyen d'écriture (2) de sorte que les fichiers audio de la première scène soient mémorisés le long de la piste (7) dans un ordre temporel de production d'objets audio de la première scène identifiant les fichiers audio.

6. Dispositif selon la revendication 2, dans lequel l'appareil de mémoire (1) a une piste le long de laquelle se déplace le moyen de lecture (2), et
dans lequel le moyen de commande (5) est réalisé de manière à commander le moyen d'écriture (2) de sorte que le fichier audio soit mémorisé dans la piste immédiatement avant ou après un autre fichier audio identifiant un objet audio devant être traité par le moyen de rendu en parallèle avec l'un objet audio identifiant le fichier audio.

7. Dispositif selon l'une des revendications précédentes, dans lequel le moyen (4) destiné à vérifier est réalisé de manière à déterminer comme première scène la scène qui a un nombre d'objets audio à traiter simultanément par un moyen de rendu supérieur à celui d'une autre scène.

8. Dispositif selon l'une des revendications précédentes, dans lequel le moyen (4) destiné à vérifier est réalisé de manière à ne déterminer une scène comme première scène que lorsqu'une utilisation du système de synthèse de champ d'onde conditionnée par la scène atteint une fraction prédéterminée de l'utilisation maximale.

9. Dispositif selon l'une des revendications précédentes, dans lequel le moyen de commande (5) est réalisé de manière à activer le moyen d'écriture (2) de sorte que les fichiers audio de la deuxième scène soient mémorisés à des emplacements libres encore restants de l'appareil de mémoire (1) après que les fichiers audio de la première scène ont été mémorisés sur l'appareil de mémoire (1).

10. Dispositif selon l'une des revendications précédentes, dans lequel l'appareil de mémoire (1) est un disque dur avec un disque de mémoire ou plusieurs disques de mémoire, pour chaque disque de mémoire étant prévue une tête d'écriture/lecture (2).

11. Dispositif selon l'une des revendications précédentes, dans lequel le moyen d'écriture et le moyen de lecture sont réalisés sous forme d'un seul composant physique (2).

12. Dispositif selon l'une des revendications précédentes, dans lequel le moyen de commande (5) est réalisé de manière à commander le moyen d'écriture (2) de sorte que les fichiers audio identifiés par des objets audio de la première scène soient écrits en continu sur l'appareil de mémoire (1), sans que le moyen de lecture ne doive sauter lors de la lecture des fichiers audio de la première scène.

13. Procédé pour mémoriser des fichiers audio pour un morceau audio dans un appareil de mémoire (1) avec un moyen d'écriture et un moyen de lecture (2), le morceau audio devant être traité par un moyen de rendu d'un système de synthèse de champ d'onde (3), le morceau audio présentant plusieurs scènes, pour chaque scène étant prévue une description de scène, et une scène définissant une succession dans le temps d'objets audio, un objet audio présentant des informations sur une source virtuelle et une identification d'un fichier audio associé à l'objet audio, aux étapes suivantes consistant à:
examiner (4) la description de scène et déterminer une première scène qui requiert une plus grande capacité de traitement du système de synthèse de champ d'onde (3) qu'une deuxième scène; et
commander (5) le moyen d'écriture (2) de sorte que les fichiers audio qui sont identifiés par la description de scène de la première scène soient écrits sur l'appareil de mémoire (1) de sorte que le moyen de lecture (2) puisse lire les fichiers audio pour la première scène plus rapidement que lorsque les fichiers audio pour la première scène sont mémorisés de manière aléatoire sur l'appareil de mémoire (1).

14. Programme d'ordinateur avec un code de programme pour réaliser le procédé pour mémoriser selon la revendication 16 lorsque le programme d'ordinateur est exécuté sur un ordinateur.
